# FASCICULE DE BREVET EUROPEEN

(11) **EP 0 357 472 B1**
(45) Date de publication et mention de la délivrance du brevet: **15.12.1993**
(21) Numéro de dépôt: 89401968.6
(22) Date de dépôt: 10.07.1989
(51) Int. Cl.: H01H 9/02, H01H 11/00, H02B 1/04

(54) **Appareils de commande et/ou de protection électrique, éléments constitutifs de ces appareils et ensembles constitués de ces éléments**
Elektrische Schalt- und/oder Schutzgeräte, Bestandteile dieser Geräte und aus diesen Teilen gebildete Baugruppen
Electrical control and/or protection apparatuses, constituent parts thereof and assemblies composed of these parts

(30) Priorité: 30.08.1988 FR 8811353
(43) Date de publication de la demande: 07.03.1990
(73) Titulaire: HAGER ELECTRO S.A., F-67210 Obernai (FR)
(72) Inventeur: Weiss, Henri, F-67370 Trughtersheim (FR)
(74) Mandataire: Bernasconi, Jean

(56) Documents cités:
- EP-A- 264 314
- DE-A- 1 949 913
- DE-B- 1 181 770
- DE-U- 8 318 613

## Description

La présente invention a trait à des appareils de commande et/ou de protection électrique, tels que par exemple des interrupteurs, commutateurs, disjoncteurs, télérupteurs, minuteries, etc, du type destiné à être fixé sur un rail, tel que par exemple un rail normalisé, par exemple selon la norme DIN 35 MM.

L'invention a également trait aux éléments constitutifs de ces appareils ainsi qu'aux différents ensembles susceptibles d'être constitués à partir de ces éléments.

Les appareils de commande et/ou de protection électrique destinés à assurer une ou plusieurs fonctions telles que commande par actionnement manuel, signalisation lumineuse, signalisaion d'état de contact de disjoncteur télérupteur, contact auxiliaire pour disjoncteur, ou autre, du type destiné à être monté sur des rails, par exemple dans le cadre de l'équipement électrique des locaux et immeubles, sont actuellement réalisés sous forme d'appareils individuels pour une fonction déterminée ou une association déterminée de fonctions. Les parties électrique et mécanique de ces appareils sont montées dans des boîtiers de type généralement modulaire, c'est-à-dire ayant des dimensions et une épaisseur modulaires, présentant une forme généralement plane avec, à leur base, des moyens d'accrochage tels que crochets ou loquets pour être montés sur un rail, et à leur sommet, des organes d'actionnement tels que boutons-poussoirs ou manettes et, le cas échéant, des organes de visualisation tels que des voyants lumineux. Des bornes de raccordement électriques sont prévues sur les côtés.

Compte tenu du grand nombre de combinaisons diverses de fonctions qui peuvent être recherchées, il est nécessaire de prévoir un grand nombre d'appareils différents, ce qui complique singulièrement la fabrication, le stockage et la commercialisation de ces appareils. De plus, le nombre de possibilités de combinaisons d'appareils entre eux, par l'électricien qui les pose, est également réduit.

La présente invention se propose de remédier à ces inconvénients et de fournir des appareils de commande et/ou de protection électrique composés d'éléments de base, en petit nombre, qui peuvent être assemblés pour former les appareils.

L'invention a donc pour objet des appareils de commande et/ou de protection électrique, de type modulaire, destinés à être fixés sur un rail normalisé, tel que par exemple un rail selon la norme DIN 35 MM, caractérisés en ce qu'ils comportent :
- un élément d'actionnement et/ou de signalisation comprenant :
- une base avec des moyens d'accrochage sur le rail, tels que par exemple des crochets ou loquets,
- un bloc possédant une première face éloignée de la base pour présenter un ou des organes d'actionnement et/ou de signalisation, et une deuxième face parallèle à la base et orientée vers elle pour présenter une ou des pièces d'actionnement entraînées par le ou lesdits organes et/ou des moyens pour adresser une signalisation vers l'organe de signalisation,
- au moins une paroi sensiblement plane s'étendant entre ladite base et ledit bloc, et transversalement à eux pour les réunir et former avec eux un ou plusieurs logements,
- et au moins un élément de contact et/ou d'alimentation comportant, dans un boîtier adapté pour occuper ledit logement et y être immobilisé, au moins un mécanisme de contact susceptible d'écarter ou de rapprocher au moins un contact mobile d'au moins un contact fixe, et/ou au moins un élément d'alimentation en lumière ou en courant des moyens de signalisation du bloc d'un élément de signalisation, ledit boîtier comportant également des bornes de raccordement électrique, et présentant, au regard de la deuxième face du bloc, une face présentant une pièce susceptible de coopérer mécaniquement avec la pièce présentée par ladite deuxième face du bloc et/ou un moyen transmettant une lumière ou un courant par ladite deuxième face du bloc.

De façon avantageuse, la somme de l'épaisseur du ou des éléments de contact faisant partie de l'appareil, et de la ou des parois planes, est sensiblement égale à l'épaisseur du bloc, laquelle est avantageusement identique à l'épaisseur de la base, c'est-à-dire à sa dimension dans une direction perpendiculaire à la base et à la paroi plane.

De préférence, la paroi sensiblement plane s'étend sur toute la surface disponible entre la base et le bloc, mais elle pourrait aussi être ajourée et/ou présenter des reliefs divers, notamment pour l'indexation ou la fixation des éléments de contact.

Le bloc peut avantageusement présenter une forme parallélépipédique et le logement formé par le bloc, la base et la paroi plane peut avantageusement être agencé de façon que l'élément de contact qui est reçu dans le logement y soit maintenu par simple clipsage ou autre déformation élastique réversible.

L'élément d'actionnement présenté par le bloc peut être prévu pour l'actionnement manuel, par exemple une manette ou un bouton-poussoir. Il peut aussi être prévu pour l'actionnement mécanique à partir d'un appareil électrique juxtaposé, par exemple un disjoncteur, télérupteur, interrupteur ou interrupteur différentiel. Ainsi, par exemple, le basculement automatique d'une manette d'un disjoncteur juxtaposé peut être transmis à une manette présentée par le bloc au moyen d'une liaison transversale usuelle, l'appareil selon l'invention pouvant alors servir, par exemple, de contact auxiliaire pour le disjoncteur.

La première face du bloc, éloignée de la base, est de préférence parallèle à la deuxième face et à la base, mais elle peut, dans une autre forme de réalisation, être constituée d'une face latérale du bloc, orientée vers un appareil juxtaposé tel que disjoncteur ou autre, pour lui présenter un élément d'actionnement entraîné par un moyen mobile de cet appareil juxtaposé.

Dans le cas où l'élément d'actionnement est ainsi destiné à être entraîné à partir d'un appareil juxtaposé, tel que disjoncteur, télérupteur, ou interrupteur différentiel, il peut avantageusement comporter des moyens de fixation, par exemple par clipsage, pour le rendre solidaire dudit appareil juxtaposé.

L'invention a également trait aux différents éléments susceptibles d'être assemblés pour former les appareils selon l'invention et aux divers ensembles formés par la réunion de tous ces éléments.

L'invention peut avantageusement comporter un ou plusieurs des éléments d'actionnement et/ou de signalisation suivants :
- Un élément d'actionnement conçu pour présenter, sur la première face du bloc, un seul poussoir ou autre organe d'actionnement susceptible d'être déplacé à l'encontre de moyens élastiques de rappel pour former un organe susceptible de générer, dans l'élément de contact associé, une impulsion.
- Un élément dont le bloc peut comporter une paire de tels boutons-poussoirs.

Dans ces deux formes de réalisation, on peut avantageusement prévoir que la paroi plane s'étende dans un plan médian de l'appareil de façon à déterminer, de part et d'autre, deux logements susceptibles de recevoir deux éléments de contact, les organes d'actionnement pouvant être soit agencés pour pouvoir agir simultanément au niveau de chacun des logements, soit décalés de façon qu'un seul élément d'actionnement puisse être actif au niveau d'un logement donné.
- Un élément dont le bloc est agencé pour présenter un bouton-poussoir ou autre organe d'actionnement identique aux précédents, et un voyant lumineux ; dans ce cas, la paroi plane peut avantageusement déterminer un seul logement sur l'une de ses faces, ladite paroi plane formant, au niveau de l'autre face, une partie d'un boîtier fixe à l'intérieur duquel est placé le circuit électrique de voyant, ce boîtier présentant des bornes de raccordement électrique.
- Un élément dont le bloc peut comporter un organe d'actionnement de type contact maintenu, c'est-à-dire présentant par exemple un mécanisme bistable de sorte qu'un actionnement sur ledit organe maintient celui-ci indéfiniment dans sa position jusqu'à ce qu'un nouvel actionnement se produise.
- Un élément dont le bloc peut présenter deux organes d'actionnement ou boutons-poussoirs de type contact maintenu.
- Un élément dont le bloc peut comporter un organe d'actionnement du type contact maintenu ainsi qu'un voyant.
- Un élément dont le bloc peut présenter un organe d'actionnement, tel qu'une manette, ayant l'effet mécanique d'un inverseur, et dans ce cas, de préférence, la paroi sensiblement plane s'étend également dans une position médiane de façon à former deux logements qui peuvent ou non, selon la construction, être sensibles chacun à la pièce mécanique actionnée par ladite manette d'inverseur.
- Un élément dont le bloc peut être conçu à la façon d'un double inverseur avec deux manettes disposées côte à côte et, dans ce cas, l'épaisseur modulaire peut être double.

Dans cette forme de réalisation, on peut avantageusement prévoir deux parois sensiblement planes s'étendant entre la base et le bloc, de façon à former, vers les deux faces externes latérales, deux logements et, entre les deux parois planes, deux autres logements juxtaposés.

Bien entendu, des formes de réalisation similaires peuvent être mises en oeuvre dans le second mode de réalisation de l'invention dans lequel une face de la paroi sensiblement plane est divisée, par une cloison transversale, en deux parties formant deux logements pouvant recevoir, par exemple, l'un, un élément de contact et l'autre, un élément agencé pour allumer un voyant.

De façon préférée, l'ensemble selon l'invention peut comporter un ou plusieurs des éléments de contact suivants :
- Un élément de contact, dit ouvert, présentant, dans un boîtier agencé pour venir se loger et se fixer dans le logement de l'élément d'actionnement, un mécanisme usuel dit de contact ouvert, dont la face tournée vers le bloc de l'élément d'actionnement présente avantageusement, sur un côté, dans l'alignement de la partie mécanique du bloc, un poussoir ou autre moyen permettant l'actionnement du mécanisme à partir de l'organe d'actionnement du bloc de l'élément d'actionnement, deux bornes de raccordement électrique étant accessibles, de préférence, de part et d'autre du bloc, leurs vis de serrage étant de préférence accessibles de part et d'autre du bloc sur la face tournée vers le bloc.
- Un élément de contact fermé, du type à contact normalement fermé, analogue, pour le reste, à l'élément précédent.
- Un élément de contact de type ouvert + fermé, ayant également un mécanisme usuel de type ouvert + fermé, un tel élément présentant, de préférence, d'une part deux bornes de raccordment accessibles de part et d'autre du bloc, comme l'élément de contact ouvert, d'autre part deux bornes supplémentaires, de préférence disposées sur des épaulements de boîtier.
- Un élément à double contact ouvert de type usuel et présentant, outre deux bornes de raccordement sur la face qui présente le poussoir ou autre partie d'actionnement en regard de la partie d'actionnement du bloc, deux bornes de raccordement, ainsi que deux autres bornes de raccordement sur des épaulements de boîtier.
- Un élément à contact double fermé, c'est-à-dire à deux mécanismes de contact du type normalement fermé, analogue pour le reste à l'élément précédent.
- Un élément de contact du type à ouverture et présentant simultanément un autre mécanisme à contact du type à fermeture, muni, comme les quatre éléments précédents, de deux paires de bornes.

Comme élément d'alimentation, on peut prévoir par exemple :
- Un élément de clignotement alimentant en courant intermittent une ampoule située dans le bloc de l'élément de visualisation ou bien adressant un rayonnement lumineux clignotant à un voyant de l'élément de visualisation.
- Un élément chuteur de tension alimentant en tension abaissée une ampoule de l'élément de visualisation.

D'autres avantages et caractéristiques de l'invention apparaîtront à la lecture de la description suivante, faite à titre d'exemple non limitatif et se référant au dessin annexé dans lequel:
Les figures 1 à 8 représentent respectivement des éléments d'actionnement à fonction d'impulsion, de deux impulsions, d'impulsions plus voyant, de contact maintenu, de deux contacts, de contact maintenu plus voyant, d'inverseuret de double inverseur.
Les figures 9 et 10 représentent deux éléments de visualisation à voyant.
Les figures 11 et 12 représentent deux éléments d'actionnement pour contacts auxiliaires de disjoncteur, télérupteur, interrupteur ou interrupteur différentiel.
Les figures 13 à 18 représentent respectivement des vues d'éléments de contact à fonction de contact à ouverture, de contact à fermeture, de contacts à ouverture et fermeture, de contacts à deux ouvertures, de contacts à deux fermetures, d'élément inverseur.
La figure 19 représente un appareil formé d'un élément selon la figure 1 et de deux éléments selon la figure 14.
La figure 20 représente une vue en élévation avec coupe de l'élément de la figure 1.
La figure 21 représente une vue en élévation avec coupe de l'élément selon la figure 15.
La figure 22 représente une vue en perspective d'un appareil selon un autre mode de mise en oeuvre de l'invention avec un élément d'actionnement à bouton-poussoir et voyant, recevant, sur deux logements d'une même face de la paroi plane, un élément de contact et un élément porte-ampoule.

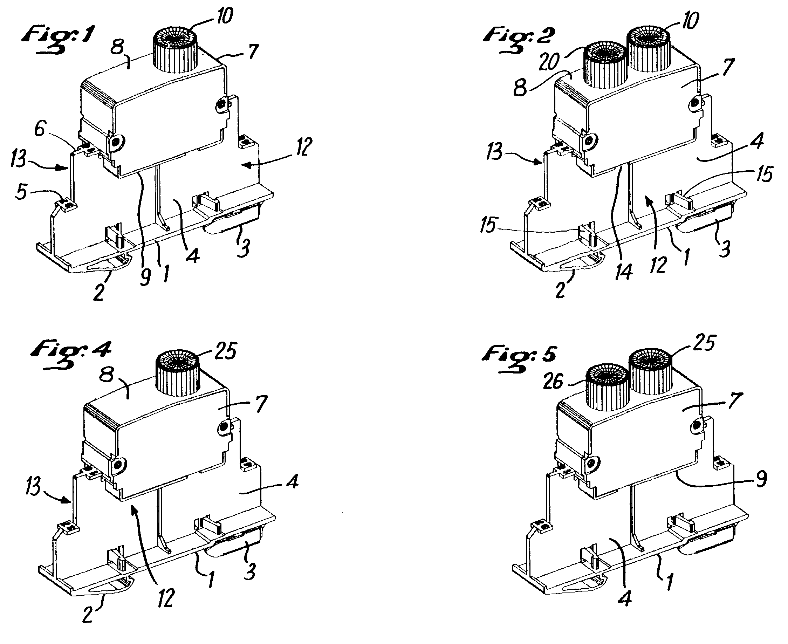

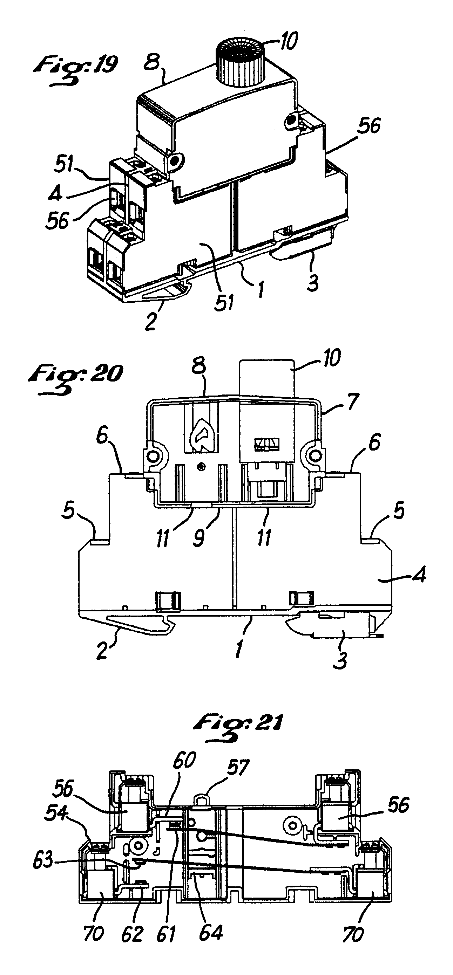

On se réfère tout d'abord aux figures 1 et 20.

L'élément d'actionnement représenté sur la figure 1 comporte une base 1 de dimensions modulaires avec un crochet fixe 2 et un loquet mobile 3, repoussé vers le crochet fixe 2 par un ressort, l'ensemble formant un moyen d'accrochage usuel sur un rail normalisé. A partir de la ligne médiane de la base 1 s'étend une paroi plane 4 avec deux épaulements successifs 5, 6, réduisant la longueur de la paroi à l'emplacement où elle se raccorde, de moulage, à un bloc 7 de forme parallélépipédique présentant une première face 8 orientée vers l'utilisateur lorsque l'appareil est monté sur le rail, et une seconde face 9, parallèle à la première et regardant vers la base 1. Sur la première face 8 émerge, a l'état de repos, un bouton-poussoir 10 en alignement avec un orifice 11 situé sur la seconde face 9. La paroi plane peut comporter sur chaque face un nervure verticale, comme on le voit sur le dessin, reçue dans une rainure complémentaire portée par la face en regard de l'élément destiné à être logé contre la paroi 4.

Le mécanisme contenu dans le bloc 7 (voir figure 20) comporte simplement le bouton-poussoir 10 guidé par des pattes venant de moulage dans le bloc 7 pour pouvoir se déplacer devant le trou 11 pratiqué dans la face 9 du bloc 7, ce trou chevauchant le bord de la paroi médiane 4 afin que le même bouton-poussoir puisse actionner simultanément deux éléments qui seraient reçus dans les logements 12 et 13, de part et d'autre de la paroi 4.

En se référant à la figure 2, on voit un autre élément d'actionnement, identique, pour l'essentiel, à l'élement d'actionnement de la figure 1 à la différence qu'il présente, sur la face 8, un second bouton-poussoir 20 de type à impulsions dont le mécanisme est identique à celui du bouton-poussoir 10 à l'exception du fait que le trou 14 situé sous l'un des boutons-poussoirs communique avec le logement 12 alors que le trou 14 sous l'autre bouton-poussoir communique avec l'autre logement 13.

Sur la figure 3, on voit un élément ayant une double fonction de bouton-poussoir à impulsion et de voyant, dans lequel la base 1, analogue à la base des figures précédentes, présente, dans sa partie médiane, une paroi plane 4, laquelle forme l'une des grandes faces d'un boîtier 21 dont l'autre face est située à la partie antérieure de l'appareil tel que vu sur la figure 3, ce boîtier 21 présentant deux paires de bornes 22, 23 disposées respectivement au voisinage d'épaulements dont les dimensions sont analogues à celles des épaulements 5 et 6, sauf quant à l'épaisseur. L'intérieur de ce boîtier 21, dont la face inférieure, c'est-à-dire parallèle à la paroi 4, forme avantageusement un couvercle déposable, reçoit le circuit électrique usuel permettant la mise sous tension d'une lampe judicieusement disposée, soit dans le boîtier 21, soit dans le bloc 7, pour illuminer un voyant 24 présenté par la paroi antérieure 8 du bloc 7, à côté du bouton-poussoir 10. Un tel élément ne comporte donc qu'un seul logement 13, la place du logement 12 étant occupée par le boîtier 21.

En se référant à la figure 4, on voit un élément pratiquement identique à l'élément de la figure 1 à l'exception du fait que le bouton-poussoir 25, qui remplace le bouton-poussoir 10, actionne, dans le bloc 7, un mécanisme du type contact maintenu, c'est-à-dire un mécanisme bistable, de sorte que, lorsque le bouton-poussoir 25 est enfoncé, il reste dans cette position jusqu'à ce qu'un nouvel actionnement le libère. De tels mécanismes sont classiques dans le domaine de l'appareillage électrique et ne vont pas être décrits plus en détail.

En se référant à la figure 5, on voit un élément analogue à celui de la figure 4 mais présentant cette fois-ci deux boutons-poussoirs du type contact maintenu 25, 26 actionnant chacun un mécanisme bistable permettant de faire déplacer, par les ouvertures situées sur la face 9 du bloc, des parties mécaniques respectives des deux mécanismes.

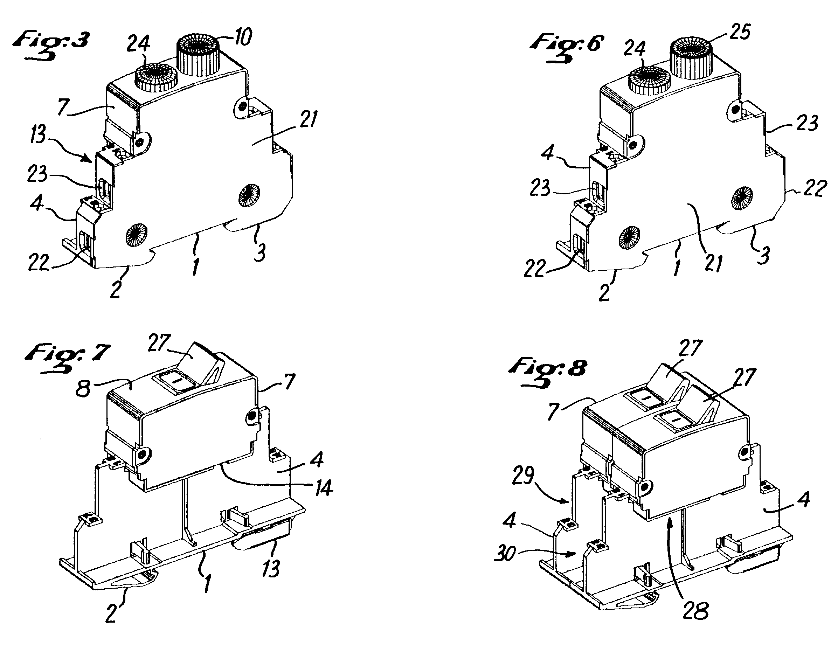

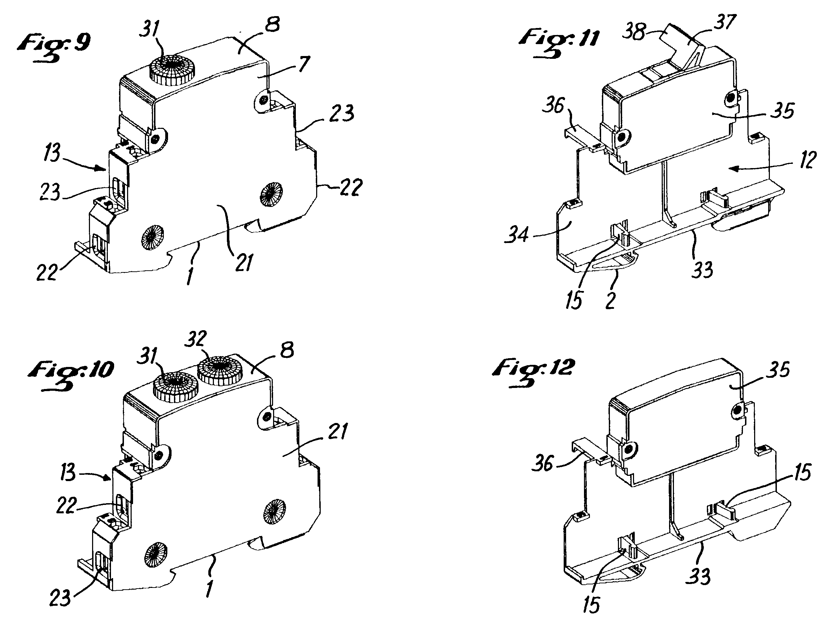

En se référant à la figure 6, on voit un élément analogue à celui de la figure 3 mais dans lequel le bouton-poussoir 10 a été remplacé par un bouton-poussoir 25 avec son mécanisme de type contact maintenu de façon à permettre d'obtenir une fonction contact maintenu + voyant 24.

En se référant à la figure 7, on voit un élément d'actionnement analogue à celui de la figure 1 mais dans lequel le bloc 7 présente, sur sa face 8, une manette 27 faisant partie d'un organe de manoeuvre pivotant dans le bloc à la manière de l'organe de manoeuvre d'un inverseur.

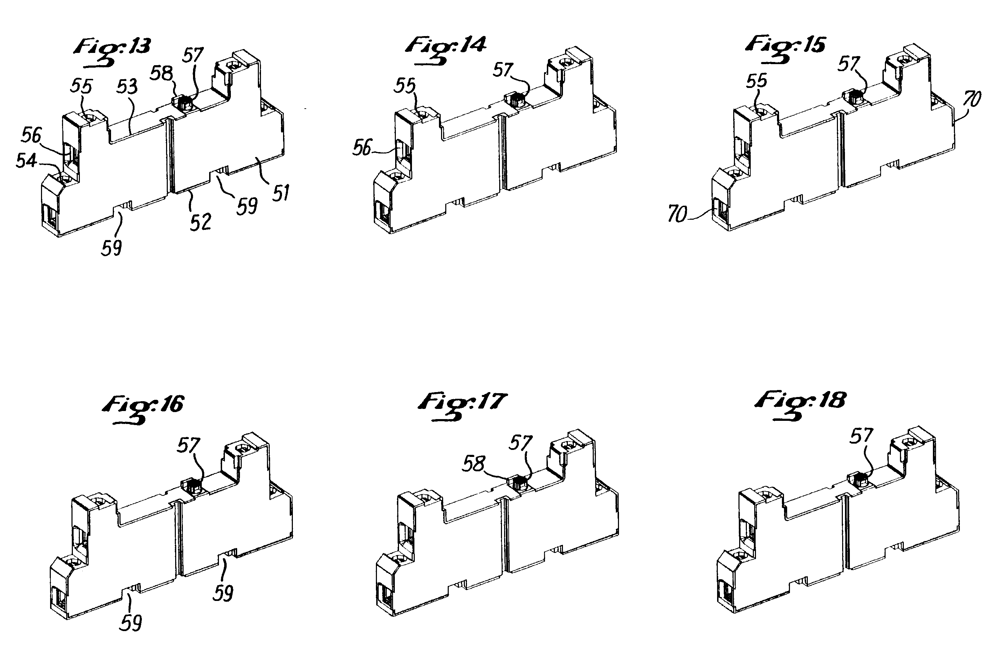

Sur la figure 8, on a représenté un élément d'actionnement dans lequel la base 1 présente une épaisseur double de celle des éléments précédents, l'épaisseur du bloc 7, formé de deux demi-blocs, étant également double de façon à former, en fait, deux blocs individuels accolés. Deux parois 4 s'étendent depuis la base 1, parallèlement l'une à l'autre, de façon à former, outre des logements 28, 29 analogues aux logements 12 et 13, un espace central 30 formant en fait un double logement. Le double bloc 7 présente, côte à côte, deux manettes 27, à la façon d'un double inverseur.

On a compris que, de préférence, le bloc 7, dans les différentes formes de réalisation représentées, ne comporte que des moyens d'actionnement mécaniques sans contenir de circuit, contact ou autres fonctions électriques. Dans le cas cependant où il comporte un voyant, il peut être envisagé que l'ampoule et les contacts d'ampoule soient situés dans le bloc 7, les contacts d'ampoule étant alimentés à partir du boîtier 21.

Sur la figure 9, on a représenté un élément ayant la même forme extérieure que l'élément de la figure 3 ou 6 mais dont la face 8 du bloc 7 ne porte qu'un voyant 31. Dans le boîtier 21 se trouve le circuit électrique de mise sous tension de la lampe illuminant le voyant.

Sur la figure 10, on a représenté un élément analogue à celui de la figure 9 mais avec deux voyants 31, 32, dont les circuits électriques sont contenus dans le boîtier 21 et sont alimentés à partir des bornes 22, 23.

Chacun de ces éléments de visualisation peut loger un élément complémentaire dans son logement 13.

On se réfère à la figure 11
L'élément d'actionnement représenté présente une base 33 ayant une épaisseur d'un demi module, base comprenant un crochet 2 mais dépourvue de loquet. D'un côté de la base s'étend une paroi 34, analogue à la paroi 4, surmontée, en porte-à-faux, par un bloc 35 analogue du bloc 7. Cet élément détermine donc un seul logement, 12, destiné à recevoir un contact auxiliaire de disjoncteur.

Une patte d'accrochage transversale 36, s'étendant vers l'autre côté de la paroi 34, permet la fixation par clipsage sur le boîtier d'un disjoncteur destiné à être juxtaposé à l'élément représenté. Le bloc présente, à sa partie supérieure, une manette pivotante 37 munie d'un prolongement latéral 38 orienté dans la course de la manette du disjoncteur pour être entraîné par cette dernière et actionner le contact de l'élément logé dans le logement 12 par l'intermédiaire du mécanisme logé dans le bloc 35 dont la face inférieure orientée vers le logement 12 présente un trou dans lequel pénétrera un poussoir présenté par l'élément de contact auxiliaire, poussoir destiné à être actionné par ledit mécanisme.

En se référant à la figure 12, on voit une variante de l'élément de la figure 11, dans laquelle le bloc 35 ne présente pas de manette, mais possède sur sa face (non vue) un organe mobile convenable, par exemple poussoir, destiné à être entraîné par un organe moteur présenté latéralement par un disjoncteur juxtaposé.

On se réfère maintenant à la figure 13.

Sur cette figure, on a représenté un élément de contact du type à contact d'ouverture, c'est-à-dire de contact normalement fermé qui, lorsqu'il est actionné, fait basculer le contact mobile en position d'ouverture. Cet élément comporte un boîtier plat 51 avec une paroi frontale postérieure 52 et une paroi frontale antérieure 53 déprimée entre deux prolongements latéraux. Il comporte également des épaulements 54 au droit des épaulements 5 de l'élément qui doit le recevoir. L'accès à l'intérieur du boîtier 51 est permis par enlèvement d'un couvercle formant l'une de ces deux grandes faces planes parallèles. La face antérieure 53 présente, à ses deux extrémités, deux passages 55 pour le vissage de bornes de raccordement 56. Vers l'un de ces passages, la face 53 présente une ouverture à travers laquelle émerge un poussoir 57 qui, lorsqu' il est enfoncé, provoque l'actionnement du mécanisme contenu dans le boîtier. On voit que, d'un côté du poussoir 57, le boîtier de l'élément possède une patte de détrompage 58 qui, lorsque l'élément est logé dans la bonne position dans un logement 12 ou 13, passe dans une creusure 14 de la face 9 du bloc 7.

Par ailleurs, la base de cet élément de contact présente deux échancrures 59 avec relief interne de façon à recevoir deux crochets élastiques d'accrochage 15 présentés par la partie inférieure de la paroi 4 de l'élément d'actionnement logeant l'élément de contact et être accroché sur celui-ci.

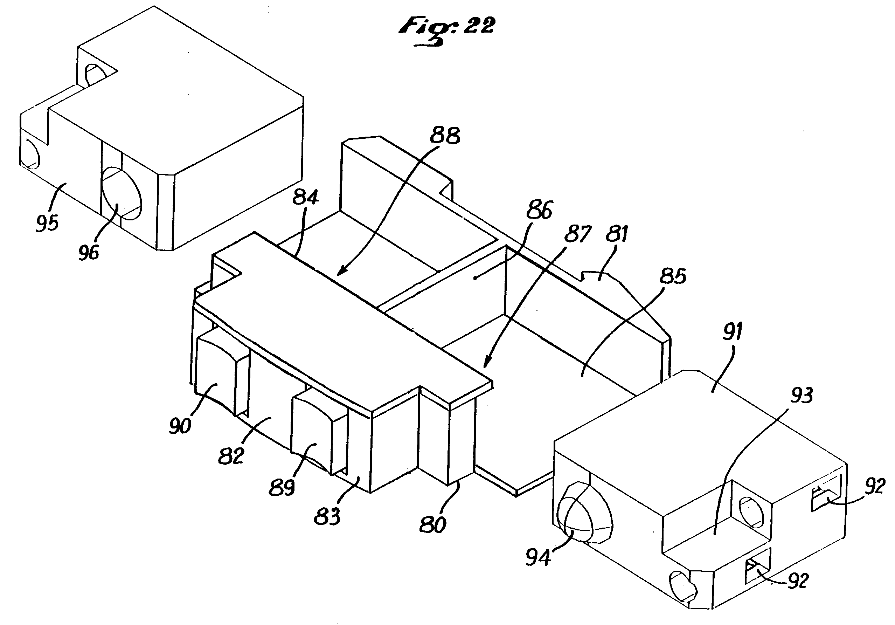

En se référant à la figure 14, on voit un élément similaire mais cette fois du type à contacts de fermeture, c'est-à-dire à contacts normalement ouverts qui, lorqu'on actionne le poussoir 57, provoque la fermeture des contacts. Un tel mécanisme se déduit facilement du mécanisme représenté sur la figure 21 et est d'ailleurs d'un type tout à fait usuel.

En se référant aux figures 15 et 21, on voit un élément dans lequel est disposé un mécanisme à deux paires de contacts, c'est-à-dire présentant un premier contact fixe 60 coopérant avec un premier contact mobile 61 normalement fermé et un second contact fixe 62 coopérant avec un second contact mobile 63 normalement ouvert, les paires de contacts étant cette fois-ci alimentées, par l'intermédiaire du circuit interne, par, d'une part, la paire de bornes 56 et, d'autre part, une paire de bornes 70 situées près des épaulements 54. Un même coulisseau 64, dont l'extrémité émergente forme le poussoir 57, peut actionner simultanément les deux paires de contacts, l'une vers l'ouverture, l'autre vers la fermeture.

Sur la figure 16, on a représenté un élément de forme analogue à celui de la figure 15 mais dans lequel sont cette fois-ci disposées deux paires de contacts de type à ouverture.

En se référant à la figure 17, on voit un élément analogue mais cette fois-ci avec deux paires de contacts du type à fermeture.

En se référant à la figure 18, on voit un élément de forme analogue formant inverseur.

Dans tous ces cas, on comprend que le mécanisme interne qui provoque l'ouverture de la paire ou des paires de contact, comprenant chaque fois un contact fixe et un contact mobile, est entraîné ou déclenché par actionnement du poussoir 57.

On se réfère maintenant à la figure 19.

Sur cette figure, on a représenté un appareil complet selon l'invention constitué d'un élément d'actionnement identique à celui représenté sur la figure 1, c'est-à-dire avec un poussoir 10 du type à impulsions, c est-à-dire qui revient à sa position initiale une fois que la pression exercée sur le poussoir a pris fin. Dans les deux logements 12, 13 ont été montés deux éléments 51 qui sont venus s'appliquer contre la paroi 4, de part et d'autre de cette paroi, et qui complètent ainsi le volume de l'appareil (voir aussi la figure 13). Dans cette position, la face 9 du bloc s'applique contre la face 53 de l'élément de contact 51, entre ses prolongements qui logent les bornes 56. Les deux éléments 51 ont été disposés de façon telle que leurs poussoirs respectifs 57 pénètrent chacun dans l'ouverture 11 située sur la face 9 du bloc 7 et soient donc alignés avec la pièce mobile d'actionnement formée par le poussoir 10. Dans la position de repos du poussoir 10, les poussoirs 57 restent dans leur position de repos pénétrant dans le trou 11. Si l'on appuie sur le poussoir 10, il vient repousser simultanément les deux poussoirs 57, provoquant l'ouverture des contacts situés dans les deux éléments 51.

Le raccordement par des conducteurs externes s'effectue facilement du fait que les bornes 56 restent libres d'accès lorsque les éléments 51 sont montés dans l'élément de la figure 1.

L'appareil ainsi réalisé peut être facilement mis en place sur le rail par l'intermédiaire du crochet 2 et du loquet 3 et peut être déposé tout aussi facilement.

On comprend que l'on peut monter, sur l'un quelconque des éléments des figures 1 à 8, un ou plusieurs des différents éléments représentés sur les figures 13 à 18. Il est ainsi possible de réaliser une grande combinaison d'appareils différents.

On se réfère maintenant à la figure 22.

Dans cet autre mode de mise en oeuvre de l'invention, le dispositif comporte un premier élément 80 avec une base 81 analogue à la base 1, un bloc 82 présentant une face 83 tournée vers l'utilisateur, une face postérieure 84 tournée vers la base 81, et une paroi plane 85 réunissant l'un des deux bords longitudinaux de la base 81 à l'un de deux bords longitudinaux de la paroi 84 du bloc 82. Une paroi transversale 86 s'étendant entre la base 81, au milieu de celle-ci, et le bloc 82, divise le volume situé au-dessus de la paroi 85 en deux logements 87, 88.

Le bloc 82 présente sur sa face 83, d'une part, un bouton-poussoir d'actionnement 89 avec un mécanisme correspondant dont la pièce d'actionnement est située dans un trou de la paroi 84 analogue au trou 11, ce trou débouchant dans le logement 87, ainsi qu'un voyant lumineux 90 formé d'une surface translucide à l'extrémité d'un trou similaire débouchant dans le logement 88.

Un élément de contact 91 présente la forme d'un parallélépipède susceptible de venir s'insérer exactement dans le logement 87. Cet élément se présente sous la forme d'un boîtier avec deux bornes de raccordement 92, accessibles par la face latérale qui reste libre après insertion de l'élément 91 dans le logement 87, l'accès aux vis de serrage étant autorisé grâce à un décrochement 93. Le poussoir d'actionnement du mécanisme de contact situé dans le boîtier de l'élément 91, est représenté en 94 et peut être par exemple revêtu d'un capuchon de caoutchouc déformable. Ce poussoir 94 s'efface lors de la mise en place dans le logement 87 puis réémerge à l'intérieur du trou qui prolonge le bouton-poussoir 89. L'actionnement du bouton-poussoir 89 provoque donc un mouvement du poussoir 94 et la mise en oeuvre de la fonction de contact prévu dans l'élément 91.

Dans le logement 88 peut venir s'insérer un élément porte-lampe 95, ayant une forme d'un boîtier énantiomorphe du boîtier 91, avec des contacts similaires et, sur sa face antérieure, un trou 96 dans lequel est disposée une douille de sorte qu'on peut y introduire une ampoule de voyant susceptible d'être allumée par l'intermédiaire du circuit électrique situé dans l'élément 95 et relié à ces bornes.

Lors de l'insertion de l'élément 95 dans le logement 88, le trou 96 avec son ampoule est en alignement avec le voyant 90.

On comprend que l'invention peut faire l'objet de nombreuses variantes tant dans ses formes que dans les fonctions électromécaniques ou électriques des différents éléments.

## Revendications

1. Appareil de commande et/ou de protection électrique, de type modulaire, destiné à être fixé sur un rail normalisé, caractérisé en ce qu'il comporte :
- un élément d'actionnement et/ou de signalisation comprenant,
- une base (1,81) avec des moyens d'accrochage (2,3) sur le rail,
- un bloc (7,82) possédant une première face (8,83) éloignée de la base pour présenter un ou des organes d'actionnement (10,25,26,27, 89), et/ou de signalisation (24,90), et une deuxième face (9,84) parallèle à la base (1,81) et orientée vers elle pour présenter une ou des pièces d'actionnement entraînées par le ou lesdits organes, et/ou des moyens pour adresser une signalisation vers le ou les organes de signalisation,
- au moins une paroi sensiblement plane (4,85) s'étendant entre ladite base (1,81) et ledit bloc (7,82), et transversalement pour les réunir et former avec eux un ou plusieurs logements (12,13,28,29,30,87,88),
- et au moins un élément de contact et/ou d'alimentation comportant, dans un boîtier adapté pour occuper ledit logement et y être immobilisé, au moins un mécanisme de contact susceptible d'écarter ou de rapprocher au moins un contact mobile d'au moins un contact fixe, et/ou au moins un moyen d'alimentation en lumière ou en courant des moyens de signalisation du bloc, ledit boîtier comportant également des bornes de raccordement électriques (56,70) et présentant, au regard de la deuxième face (9,84) du bloc (7,82), une face (53) présentant une pièce (57) susceptible de coopérer mécaniquement avec la pièce correspondante présentée par ladite deuxième face (9,84) du bloc et/ou un moyen transmettant une lumière ou un courant par ladite deuxième face (9,84) du bloc.

2. Appareil selon la revendication 1, caractérisé en ce que la somme de l'épaisseur du ou des éléments de contact faisant partie de l'appareil, et de la ou des parois planes, est sensiblement égale à l'épaisseur du bloc et à l'épaisseur de la base.

3. Appareil selon l'une des revendications 1 et 2, caractérisé en ce que le bloc présente une forme sensiblement parallélépipédique.

4. Appareil selon l'une quelconque des revendications 1 à 3, caractérisé en ce que l'élément de contact est reçu dans son logement et maintenu par clipsage ou autre déformation élastique.

5. Appareil selon l'une quelconque des revendications 1 à 4, caractérisé en ce que l'élément d'actionnement et/ou de visualisation présente une paroi sensiblement plane (4) s'étendant dans sa partie médiane entre la base et le bloc de façon à former au moins un logement (12, 13) sur une face de ladite paroi.

6. Appareil selon la revendication 5, caractérisé en ce que ladite paroi (4) forme, de part et d'autre du bloc (7), deux épaulements (5,6).

7. Appareil selon l'une des revendications 5 et 6, caractérisé en ce que, sur l'une des face de la paroi (4), il est formé un boîtier (21) susceptible de contenir un circuit électrique.

8. Appareil selon l'une des revendications 5 et 6, caractérisé en ce qu'il présente deux parois sensiblement planes (4) disposées parallèlement de façon à former, entre elles, deux logements (30) et, sur les autres faces, deux autres logements (28, 29).

9. Appareil selon l'une quelconque des revendications 1 à 5, caractérisé en ce qu'il comporte une paroi transversale (86) perpendiculaire à ladite paroi sensiblement plane (85) et déterminant, sur cette paroi, deux logements (87,88).

10. Appareil selon l'une quelconque des revendications 1 à 9, notamment pour contact auxiliaire juxtaposé de disjoncteur, télérupteur, interrupteur ou interrupteur différentiel, caractérisé en ce qu'il comporte, sur le bloc (35), des moyens (38) pour être actionné mécaniquement par l'appareil juxtaposé.

11. Appareil selon l'une quelconque des revendications 1 à 10, caractérisé en ce que l'élément d'actionnement et/ou de visualisation présente des moyens de patte d'accrochage (36) s'étendant latéralement pour l'accrochage sur un appareil juxtaposé.

12. Elément d'actionnement et/ou de signalisation pour appareil selon l'une quelconque des revendications 1 à 11, caractérisé en ce qu'il présente, sur une face du bloc (7,82), l'un au moins des organes suivants : poussoir de mécanisme à impulsion, voyant lumineux, poussoir de mécanisme de type contact maintenu, manette d'inverseur, ledit ou lesdits organes coopérant avec des moyens correspondants contenus dans le bloc.

13. Elément de contact pour appareil selon l'une quelconque des revendications 1 à 11, caractérisé en ce qu'il présente, sur une face (53), un poussoir ou autre moyen d'actionnement (57,94), ledit élément comprenant, dans son boîtier, l'un quelconque des mécanismes de contact suivants: contact ouvert, contact fermé, contact ouvert + fermé, double contact ouvert, double contact fermé, contact de type à ouverture et contact de type à fermeture, inverseur, ledit boîtier présentant une ou plusieurs paires de bornes (56,70) reliées aux contacts desdits mécanismes.

14. Elément selon la revendication 13, caractérisé en ce que ledit poussoir (57) émerge, au repos, de la face correspondante (53) de l'élément.

15. Elément d'alimentation pour appareil selon l'une quelconque des revendications 1 à 11, caractérisé en ce qu'il comporte, dans son boîtier, l'un quelconque des moyens suivants : moyen de clignotement, moyen chuteur de tension, moyen porte-lampe.

16. Elément selon l'une des revendications 13 à 15, caractérisé en ce qu'il comporte des épaulements et des bornes de raccordement (56,70) au niveau desdits épaulements.

17. Elémént selon l'une quelconque des revendications 13 à 16, caratérisé en ce qu'il comporte une paroi (53) déprimée entre deux prolongements, pour s'appliquer contre la deuxième face (9, 84) du bloc.

18. Ensemble constitué par l'assemblage d'éléments selon l'une quelconque des revendications 12 à 17.

## Claims

1. Electric control and/or protection apparatus, of modular type, intended to be secured on a standardized rail, characterized in that it includes:
- an actuating and/or signalling element comprising:
- a base (1, 81) with means for hooking (2, 3) onto the rail,
- a unit (7, 82) having a first face (8, 83) spaced from the base to present one or more actuation (10, 25, 26, 27, 89) and/or signalling (24, 90) members, and a second face (9, 84) parallel to the base (1, 81) and oriented towards it to present one or more actuation parts driven by the said member(s), and/or means for addressing a signalling towards the signalling member(s),
- at least one substantially flat wall (4, 85) extending between the said base (1, 81) and the said unit (7, 82), and transversely to join them together and form with them one or more housings (12, 13, 28, 29, 30, 87, 88),
- and at least one contact and/or supply element, including, in a casing adapted to occupy the said housing and be immobilized therein, at least one contact mechanism able to move at least one movable contact away from, or towards, at least one fixed contact, and/or at least one light or current supply means away from, or towards, the signalling means of the unit, the said casing comprising also electric connection terminals (56, 70) and having, facing the second face (9, 84) of the unit (7, 82), a face (53) which has a part (57) able to cooperate mechanically with the corresponding part presented by the said second face (9, 84) of the unit, and/or means transmitting a light or a current through the said second face (9, 84) of the unit.

2. Apparatus according to claim 1, characterized in that the sum of the thickness of the contact element(s) forming part of the apparatus, and of the flat wall(s) is substantially equal to the thickness of the unit and to the thickness of the base.

3. Apparatus according to either claim 1 or claim 2, characterized in that the unit has an approximately parallelepipedic shape.

4. Apparatus according to any one of claims 1 to 3, characterized in that the contact element is accommodated in its housing and held by clipping or other elastic deformation.

5. Apparatus accordng to any one of claims 1 to 4, characterized in that the actuation and/or display element has a substantially flat wall (4) extending in its central part between the base and the unit so as to form at least one housing (12, 13) on a face of the said wall.

6. Apparatus according to claim 5, characterized in that the said wall (4) forms, on both sides of the unit (7), two shoulders (5, 6).

7. Apparatus according to either of claims 5 or 6, characterized in that, on one of the faces of the wall (4), a casing (21) is formed able to accommodate an electric circuit.

8. Apparatus according to either of claims 5 or 6, characterized in that it has two substantially flat walls (4) disposed so as to be parallel and to form, between them, two housings (30) and, on the other faces, two other housings (28, 29).

9. Apparatus according to any one of claims 1 to 5, characterized in that it has a transversal wall (86) perpendicular to the said substantially flat wall (85) and determining, on this wall, two housings (87, 88).

10. Apparatus according to any one of claims 1 to 9, particularly for a juxtaposed auxiliary contact for a circuit-breaker, trip switch, switch or differential switch, characterized in that it includes, on the unit (35), means (38) for being mechanically actuated by the juxtaposed apparatus.

11. Apparatus according to any one of claims 1 to 10, characterized in that the actuation and/or display means comprises hooking tab means (36) extending laterally for hooking on a juxtaposed apparatus.

12. Actuating and/or signalling element for an apparatus according to any one of claims 1 to 11, characterized in that it has, on a face of the unit (7, 82) at least one the following members : pulse mechanism push-button, pilot light, held-contact type mechanism push-button, change-over contact lever, the said member (s) cooperating with corresponding means contained in the unit.

13. Contact element for apparatus according to any one of claims 1 to 11, characterized in that it has, on one face (53), a push-button or other actuation means (57, 94), the said element including, in its casing, any one of the following contact mechanisms: open contact, closed contact, open + closed contact, double open contact, double closed contact, opening type contact and closing type contact, inverter, the said casing having one or more pairs of terminals (56, 70) connected to the contacts of the said mechanisms.

14. Contact element according to claim 13, characterized in that the said push-button (57) emerges, at rest, from the corresponding face (53) of the element.

15. Supply element for an apparatus according to any one of claims 1 to 11, characterized in that it includes, in its casing, any one of the following means: flashing means, voltage drop means, lamp-holding means.

16. Element according to any one of claims 13 to 15, characterized in that it has shoulders and connection terminals (56, 70) at the level of the said shoulders.

17. Element according to any one of claims 13 to 16, characterized in that it includes a wall (53) depressed between two extensions to apply against the second face (9, 84) of the unit.

18. Unit constituted by the assembly of elements according to any one of claims 12 to 17.

## Patentansprüche

1. Elektrisches Schalt- und/oder Schutzgerät modularer Bauart zur Anbringung an einer genormten Schiene bestimmt, **gekennzeichnet durch:**
- ein Betätigungs- und/oder Signalgebungselement, mit
- einer Basis (1,81) mit Mitteln (2,3) zur Befestigung an der Schiene,
- einem Block (7,82) mit einer ersten, von der Basis entfernten Seite (8,83), die ein oder mehrere Betätigungsorgane (10,25,26,27,89) und/oder Signalgebungsorgane (24,90) aufweist, und mit einer zweiten, parallel zur Basis (1,81) verlaufenden und zu ihr hin gerichteten Seite (9.84), die ein oder mehrere Betätigungsteil(e), die durch das Organ/die Organe bewegt werden, und/oder Mittel, um ein Signal zu dem/den Signalgebungsorgan(en) zu senden, aufweist.
- mindestens einer, im wesentlichen flachen Wand (4,85), die zwischen der Basis (1,81) und dem Block (7,82) quer so verläuft, daß sie miteinander verbunden werden und gemeinsam einen Aufnahmeraum oder mehrere Aufnahmeräume (12,13,28,29, 30,87,88) bilden,
- mindestens einem Kontakt- und/oder Versorgungselement, das in einem zur Belegung des Aufnahmeraumes und Verbleib dort angepaßten Gehäuse wenigstens einen Kontaktmechanismus umfaßt, der mindestens einen beweglichen Kontakt zu einem unbeweglichen Kontakt hin- und herbewegen kann, und/oder mindestens ein Licht- und Stromversorgungsmittel der Signalgebungsmittel des Blocks enthält, hierbei umfaßt das Gehäuse auch elektrische Anschlußklemmen (56,70) und bildet in Bezug auf die zweite Seite (9,84) des Blocks (7,82) eine Fläche (53), die einen Teil (57) enthält, der mechanisch mit dem entsprechenden Teil der zweiten Seite (9,84) des Blocks und/oder mit einem durch die zweite Seite (9,84) des Blocks licht- oder stromübertragenden Mittel zusammenwirkt.

2. Gerät nach Anspruch 1, **dadurch gekennzeichnet,** daß die Summe der Höhe des/der Kontaktelemente(s), die einen Teil des Gerätes bilden und die Höhe der flachen Wand/Wände im wesentlichen gleich groß ist wie die Höhe des Blocks und der Basis.

3. Gerät nach einem der Ansprüche 1 oder 2 , **dadurch gekennzeichnet,** daß der Block eine im wesentlichen parallelepipedische Form aufweist.

4. Gerät nach einem der Ansprüche 1 bis 3 , **dadurch gekennzeichnet,** daß das Kontaktelement in seinem Aufnahmeraum durch eine Rastverbindung oder eine andere federnde Verformung befestigt ist.

5. Gerät nach einem der Ansprüche 1 bis 4 , **dadurch gekennzeichnet,** daß das Betätigungs- und/oder Anzeigeelement eine im wesentlichen flache Wand (4) aufweist, die in ihrem mittleren Teil zwischen der Basis und dem Block so verläuft, daß mindestens ein Raum (12,13) auf einer Seite der Wand gebildet ist.

6. Gerät nach Anspruch 5, **dadurch gekennzei chnet,** daß die Wand (4) beiderseits des Blocks (7) zwei Stufen (5,6) bildet.

7. Gerät nach einem der Ansprüche 5 und 6 , **dadurch gekennzeichnet,** daß auf einer Seite der Wand (4) ein Gehäuse (21) geschaffen ist, das einen elektrischen Schaltkreis aufnimmt.

8. Gerät nach einem der Ansprüche 5 und 6 , **dadurch gekennzeihnet,** daß es zwei in wesentlichen flache Wände (4) aufweist, die parallel angeordnet sind, um zwischen den Wänden zwei Aufnahmeräume (30) und auf den anderen Seiten zwei weitere Aufnahmeräume (28,29) zu bilden.

9. Gerät nach einem der Ansprüche 1 bis 5 , **gekennzeichnet durch** eine senkrecht zur ebenen Wand (85) liegenden Querwand (86), die an der Wand (85) zwei Aufnahmeräume (87,88) festlegt.

10. Gerät nach einem der Ansprüche 1 bis 9, insbesondere als für einen danebengelegten Hilfskontakt eines Abschalters, Fernschalters, Unterbrechers und Differentialunterbrechers, **dadurch gekennzeichnet,** daß an dem Block (35) Mittel (38) vorgesehen sind, die mechanisch durch das danebengelegte Gerät betätigbar sind.

11. Gerät nach einem der Ansprüche 1 bis 10, **dadurch gekennzeichnet,** daß das Betätigungs- und/oder Anzeigeelement seitlich sich erstreckende Mittel in Form einer Halteklammer zur Festlegung an ein danebenliegendes Gerät aufweist.

12. Betätigungs- und/oder Signalgebungselement für ein Gerät nach einem der Ansprüche 1 bis 11, **dadurch gekennzeichnet,** daß es auf einer Seite des Blocks (7,82) mindestens eins der folgender Organe aufweist: Drücker für Impulsmechanismus, Anzeigelampe, Drückermechanismus nach Art eines Selbsthaltekontaktes, Umschalthebel, wobei diese(s) Mittel mit den entsprechenden im Block enhaltenen Mitteln zusammenwirkten.

13. Kontaktelement für ein Gerät nach einem der Ansprüche 1 bis 11, **dadurch gekennzeichnet,** daß es auf einer Seite (53) einen Druckknopf oder andere Betätigungsmittel (57,94) aufweist, wobei das Element in seinem Gehäuse einen der folgenden Kontaktmechanismen aufweist: geöffneter Kontakt, geschlossener Kontakt, doppelter geschlossener Kontakt, geöffneter + geschlossener Kontakt, doppelter geöffneter Kontakt, doppelter geschlossener Kontakt, Öffnungskontakt und Schließungskontakt, Umschalter, wobei das Gehäuse ein oder mehrere Anschlußklemmenpaar(e) (56,70) aufweist, die mit den Mechanismen verbunden sind.

14. Element nach Anspruch 13, **dadurch gekennzeichnet,** daß der Drücker (57) in der Ruhestellung aus der entsprechenden Seite (53) des Elements herausragt.

15. Versorgungselement für ein Gerät nach einem der Ansprüche 1 bis 11, **dadurch gekennzeichnet,** daß es in seinem Gehäuse eins der folgenden Mittel enthält: Blinkmittel, Spannungsabfallmittel, Lampenträgermittel.

16. Element nach einem der Ansprüche 13 bis 15, **dadurch gekennzeichnet,** daß es Stufen und Anschlußklemmen (56,70) in der Höhe der Stufen enthält.

17. Element nach einem der Ansprüche 13 bis 16, **dadurch gekennzeichnet,** daß es eine zwischen zwei Verlängerungen erniedrigte Wand (53) enthält, die gegen die zweite Seite (9,84) des Blocks anliegt.

18. Baugruppe,die durch die Montage aus Elementen nach den Ansprüchen 12 bis 17 gebildet wird.
